# EUROPEAN PATENT APPLICATION

(11) **EP 4 550 774 A1**
(43) Date of publication of application: **07.05.2025**
(21) Application number: 23830365.5
(22) Date of filing: 28.06.2023
(51) Int. Cl.: H04N 13/167

(54) **SYNCHRONIZATION VERIFICATION METHOD AND APPARATUS, ELECTRONIC DEVICE, AND STORAGE MEDIUM**

(30) Priority: 28.06.2022 CN 202210753912
(71) Applicant: Shining 3D Tech Co., Ltd., Hangzhou, Zhejiang 311258 (CN)
(72) Inventor: LI, Zhouqiang, Hangzhou, Zhejiang 311258 (CN); ZHENG, Mingming, Hangzhou, Zhejiang 311258 (CN)
(74) Representative: Zaboliene, Reda
(86) International application number: PCT/CN2023/103425
(87) International publication number: WO 2024/002194

(57) **Abstract**

Embodiments of the present disclosure relate to a synchronization verification method and apparatus, an electronic device, and a storage medium. The method is applied to a scanning device comprising at least two image acquisition apparatuses. The method comprises: at least one image acquisition apparatus receiving a trigger instruction comprising image frame period data; a plurality of image acquisition apparatuses generating corresponding square wave synchronization signals on the basis of the image frame period data; the plurality of image acquisition apparatuses acquiring image frames on the basis of the corresponding square wave synchronization signals to obtain the number of the acquired image frames in unit time; and synchronizing the square wave synchronization signals of the plurality of image acquisition apparatuses according to a preset synchronization frequency, and on the basis of the square wave synchronization signals of the plurality of image acquisition apparatuses and the number of the acquired image frames, generating a synchronization verification result of the plurality of image acquisition apparatuses. By using the described technical solution, double check of time base and frame rate can be performed on the image acquisition apparatuses, so that the synchronization precision is ensured, different scenario requirements are further met, and the data acquisition efficiency is improved.

## Description

The present disclosure claims the priority to Chinese patent application with application No. 202210753912.0, filed on June 28, 2022, entitled "SYNCHRONIZATION VERIFICATION METHOD AND APPARATUS, ELECTRONIC DEVICE, AND STORAGE MEDIUM" the content of which is hereby incorporated herein fully by reference into the present disclosure for all purposes.

### FIELD

The present disclosure relates to a field of data processing technology, and specifically to a synchronization verification method, an apparatus, an electronic device and a storage medium.

### BACKGROUND

Scanning technology is currently developing rapidly. For example, a three-dimensional scanner may realize three-dimensional scanning of an object and is widely used in machinery, medical plastic surgery, and other fields.

In related art, the three-dimensional data image acquisition device of the three-dimensional scanner should acquire images at the same time as a spatial position tracking device when working to ensure accurate acquisition. In addition, more and more application scenarios have multiple spatial position tracking devices and multiple three-dimensional data image acquisition devices working in a cluster. However, image synchronization during the acquisition process cannot be guaranteed, resulting in inaccurate scanning result and relatively low scanning efficiency.

### SUMMARY

### Technical issues to be resolved:

The technical problem to be solved by the present disclosure is to solve the existing problem of inaccurate scanning results and relatively low scanning efficiency due to the inability to ensure image synchronization during the three-dimensional data image acquisition process.

### Technical solution:

In order to solve the above technical problems, the embodiments of the present disclosure provide a synchronization verification method, an apparatus, an electronic device and a storage medium.

In a first aspect, an embodiment of the present disclosure provides a synchronization verification method, the method is applied to a scanning device, the scanning device includes at least two image acquisition devices, and the method includes:
receiving a trigger instruction by at least one of the image acquisition devices, the trigger instruction comprising image frame period data;
generating square wave synchronization signals based on the image frame period data by a plurality of image acquisition devices;
acquiring image frames based on the square wave synchronization signals via the plurality of image acquisition devices and obtaining an acquisition number of the image frames that are acquired per unit time; wherein the square wave synchronization signals of the plurality of image acquisition devices are synchronized according to a preset synchronization frequency;
generating a synchronization verification result of the plurality of image acquisition devices based on the square wave synchronization signals and acquisition numbers of the plurality of image acquisition devices.

In a second aspect, an embodiment of the present disclosure further provides a synchronization verification apparatus, which is applied to a scanning device, where the scanning device includes at least two image acquisition devices, and the synchronization verification apparatus includes:
a receiving module, is configured to receive a trigger instruction by at least one of the image acquisition devices, the trigger instruction comprising image frame period data;
a generating module, is configured to generate square wave synchronization signals based on the image frame period data by a plurality of image acquisition devices;
an acquisition module, is configured to acquire image frames based on the square wave synchronization signals via the plurality of image acquisition devices and obtaining an acquisition number of the image frames that are acquired per unit time; wherein the square wave synchronization signals of the plurality of image acquisition devices are synchronized according to a preset synchronization frequency;
a processing module, is configured to generate a synchronization verification result of the plurality of image acquisition devices based on the square wave synchronization signals and acquisition numbers of the plurality of image acquisition devices.

In a third aspect, an embodiment of the present disclosure further provides an electronic device, including: a processor; a storage device for storing instructions executable by the processor; the processor is used to read the instructions from the storage device and execute the instructions to implement a synchronization verification method as provided in the embodiment of the first aspect of the present disclosure.

In a fourth aspect, an embodiment of the present disclosure further provides a computer-readable storage medium, where the storage medium stores a computer program, and the computer program is used to execute the synchronization verification method provided in the embodiment of the first aspect of the present disclosure.

### Beneficial effects:

The above technical solution provided by the embodiment of the present disclosure has the following advantages compared with the prior art:
The synchronization verification scheme provided by the embodiment of the present disclosure is applied to a scanning device, and the scanning device includes at least two image acquisition devices, including: at least one image acquisition device receives a trigger instruction. where the trigger instruction includes image frame period data, a square wave synchronization signal that is generated by multiple image acquisition devices based on the image frame period data, multiple image acquisition devices acquire image frames based on the corresponding square wave synchronization signals and obtain an acquisition number of the image frames that are acquired in unit time. Among them, the square wave synchronization signals of the multiple image acquisition devices are synchronized according to a preset synchronization frequency, and a synchronization verification result of the multiple image acquisition devices are generated based on the square wave synchronization signals and the acquisition number of the image frames. By using the above technical scheme, the image acquisition device may be double checked in terms of time base and frame rate, reducing an accumulated error caused by the time base or the asynchrony of the acquired data caused by frame loss, ensuring the synchronization accuracy, further meeting needs of different scenarios, and improving data acquisition efficiency.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure and, together with the description, serve to explain the principles of the present disclosure.

In order to more clearly illustrate embodiments of the present disclosure or the technical solutions in the prior art, the drawings required for use in the embodiments, or the description of prior art will be briefly introduced below. Obviously, for ordinary technicians in this field, other drawings can be obtained based on the drawings without paying any creative labor.
FIG. 1 is a schematic diagram of a flowchart of a synchronization verification method provided by an embodiment of the present disclosure.
FIG. 2 is a schematic diagram of a flowchart of another synchronization verification method provided by an embodiment of the present disclosure.
FIG. 3a is a schematic diagram of a connection of an image acquisition device provided by an embodiment of the present disclosure.
FIG. 3b is a schematic diagram of another connection of an image acquisition device provided by an embodiment of the present disclosure.
FIG. 3c is a schematic diagram of another connection of an image acquisition device provided by an embodiment of the present disclosure.
FIG. 4 is a schematic diagram of a structure of a synchronization verification device provided by an embodiment of the present disclosure.
FIG. 5 is a schematic diagram of a structure of an electronic device provided by an embodiment of the present disclosure.

### DESCRIPTION

In order to make purpose, technical solution and advantage of an embodiment of the present disclosure clearer, the technical solution in the embodiment of the present disclosure will be clearly and completely described below. Obviously, the described embodiment is part of embodiments of the present disclosure, not all of the embodiments. Based on the embodiment of the present disclosure, all other embodiments obtained by ordinary technicians in this field without creative work are within a scope of protection of the present disclosure.

The synchronous verification method provided by the present disclosure is applied in an environment where a scanning device includes at least two image acquisition devices. Among them, for the scanning device including at least two image acquisition devices, at least one image acquisition device may be a main image acquisition device such as a spatial position tracking device. At least one image acquisition device may be a slave image acquisition device such as a three-dimensional data image acquisition device.

Among them, at least one image acquisition device receives a trigger instruction. where the trigger instruction includes image frame period data, a square wave synchronization signal that is generated by multiple image acquisition devices based on the image frame period data, multiple image acquisition devices acquire image frames based on the corresponding square wave synchronization signals and obtain an acquisition number of the image frames that are acquired in unit time. Among them, the square wave synchronization signals of the multiple image acquisition devices are synchronized according to a preset synchronization frequency, and a synchronization verification result of the multiple image acquisition devices are generated based on the square wave synchronization signals and the acquisition number of the image frames.

In this way, the image acquisition device may be double checked in terms of time base and frame rate, reducing an accumulated error caused by the time base or the asynchrony of the acquired data caused by frame loss, ensuring the synchronization accuracy, further meeting needs of different scenarios, and improving data acquisition efficiency.

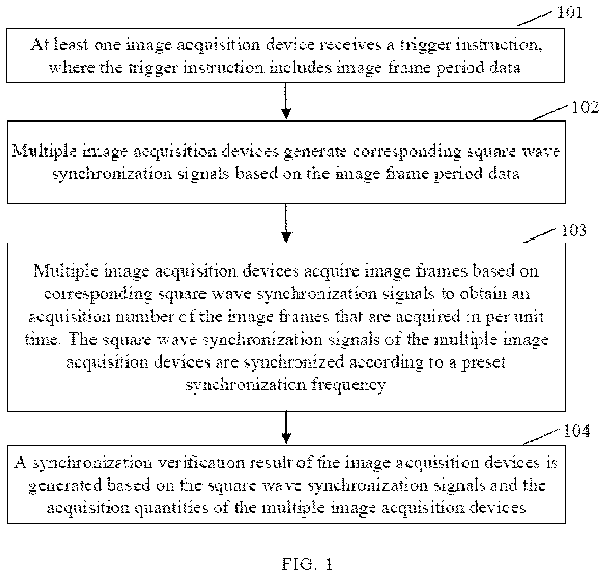

FIG. 1 is a flowchart of a synchronization verification method provided by an embodiment of the present disclosure, which may be performed by a synchronization verification device. The device may be implemented by software and/or hardware and may generally be integrated into an electronic device. As shown in FIG. 1, the method includes:
Step 101: at least one image acquisition device receives a trigger instruction, where the trigger instruction includes image frame period data.

Among them, the image acquisition device refers to an image acquisition module with a camera or other photographing device. In the embodiment of the present disclosure, the scanning device includes at least two image acquisition devices, which means at least one three-dimensional data image acquisition device for capturing an image of a scanned object, and at least one spatial position tracking device for capturing an image of a position of a scanning device.

In the embodiments of the present disclosure, there are many ways for the image acquisition device to simultaneously receive the trigger instruction. In different application scenarios, the ways in which the image acquisition device simultaneously receives trigger instructions are different. In some embodiments, the image acquisition device includes a wireless synchronization module. The at least two image acquisition devices include a master image acquisition device and at least one slave image acquisition device. The at least one image acquisition device receives the trigger instruction, including: the master image acquisition device receives the trigger instruction and simultaneously generates a trigger signal and sends it to at least one slave image acquisition device through the wireless synchronization module.

In other embodiments, the image acquisition device includes a wireless synchronization module, at least two image acquisition devices include a master image acquisition device and at least one slave image acquisition device. The at least one image acquisition device receives a trigger instruction, including: each master image acquisition device receives the trigger instruction and simultaneously generates a trigger signal and sends the trigger signal to the slave image acquisition device that is connected to the master image acquisition device for communication through the wireless synchronization module.

The above two methods are merely examples of at least one image acquisition device receiving the trigger instruction. The embodiments of the present disclosure do not specifically limit the method in which at least one image acquisition device receives the trigger instruction.

In the embodiment of the present disclosure, the trigger instruction includes image frame period data, where the image frame period data refers to the image acquisition frequency, such as how many frames of images are acquired per second.

Step 102, multiple image acquisition devices generate corresponding square wave synchronization signals based on the image frame period data.

The square wave synchronization signal refers to a periodically repeated pulse sequence, and the square wave pulse period refers to a time interval between two adjacent pulses. The image acquisition frequency may be determined based on the square wave pulse period. In the embodiment of the present disclosure, the square wave synchronization signal is used to control the image acquisition device to acquire image frames according to the square wave synchronization signal, that is, to acquire image frames according to a certain period.

Step 103, multiple image acquisition devices acquire image frames based on corresponding square wave synchronization signals to obtain the acquisition number of the image frames acquired per unit time. The square wave synchronization signals of the multiple image acquisition devices are synchronized according to the preset synchronization frequency.

The acquisition number refers to the number of image frames obtained by acquiring image frames according to the square wave synchronization signal in unit time. For example, 2 frames are acquired per second according to the square wave synchronization signal, and the acquisition number obtained in unit time is 2. For another example, 5 frames are acquired per second according to the square wave synchronization signal, and the acquisition number obtained in unit time is 5.

In an embodiment of the present disclosure, square wave synchronization signals of multiple image acquisition devices are synchronized according to a preset synchronization frequency, where the preset synchronization frequency is selected and set according to the application scenario. For example, outputting a pulse signal at a fixed time per second to realign and synchronize the square wave synchronization signals, thereby effectively reducing the cumulative error in the synchronization process.

Step 104, a synchronization verification result of the image acquisition devices is generated based on the square wave synchronization signals and the acquisition quantities of the multiple image acquisition devices.

Among them, there are many ways to generate the synchronization verification result of the image acquisition device based on the square wave synchronization signals and the acquisition numbers of multiple image acquisition devices. In some embodiments, a reference number of image frames per unit time is obtained by counting the image frames based on corresponding square wave synchronization signals. In response to the acquisition number being the same as the reference number, it is determined that the acquisition data of the image acquisition devices are synchronized. In response to the acquisition number being different from the reference number, it is determined that the acquisition data of the image acquisition devices are not synchronized.

**In** other embodiments, the acquisition number is calculated to obtain the image acquisition frequency, and a reference frequency is determined based on the square wave synchronization signals. In response to the image acquisition frequency being the same as the reference frequency, it is determined that the acquisition data of the image acquisition devices are synchronized. In response to the image acquisition frequency being different from the reference frequency, it is determined that the acquisition data of the image acquisition devices are not synchronized.

The above two methods are merely examples of generating the synchronization verification result of the multiple image acquisition devices based on the square wave synchronization signals and acquisition number of the multiple image acquisition devices. The present disclosure does not specifically limit the methods of generating the synchronization verification result of the multiple image acquisition devices based on the square wave synchronization signals and acquisition number of the multiple image acquisition devices.

The synchronization verification scheme provided by the embodiment of the present disclosure is applied to a scanning device, and the scanning device includes at least two image acquisition devices, including: at least one image acquisition device receives a trigger instruction. where the trigger instruction includes image frame period data, a square wave synchronization signal that is generated by multiple image acquisition devices based on the image frame period data, multiple image acquisition devices acquire image frames based on the corresponding square wave synchronization signals and obtains an acquisition number of the image frames acquired per unit time. Among them, the square wave synchronization signals of the multiple image acquisition devices are synchronized according to a preset synchronization frequency, and a synchronization verification result of the multiple image acquisition devices are generated based on the square wave synchronization signals and the acquisition number of the image frames. By the above technical scheme, the image acquisition device may be double checked in terms of time base and frame rate, reducing an accumulated error caused by the time base or the asynchrony of the acquired data caused by frame loss, ensuring the synchronization accuracy, further meeting needs of different scenarios, and improving data acquisition efficiency.

Specifically, for a 3D scanner, the 3D data image acquisition device must acquire images at the same time as the spatial position tracking device when working. More and more application scenarios have multiple spatial position tracking devices and multiple 3D data image acquisition devices working in clusters to improve image acquisition efficiency. However, it is impossible to achieve synchronous communication between multiple image acquisition devices, resulting in low image acquisition efficiency. As the acquisition signal may not be monitored in real time, and the acquisition signal will have time accumulation errors and frame loss errors, and the validity of the synchronous image data may not be guaranteed.

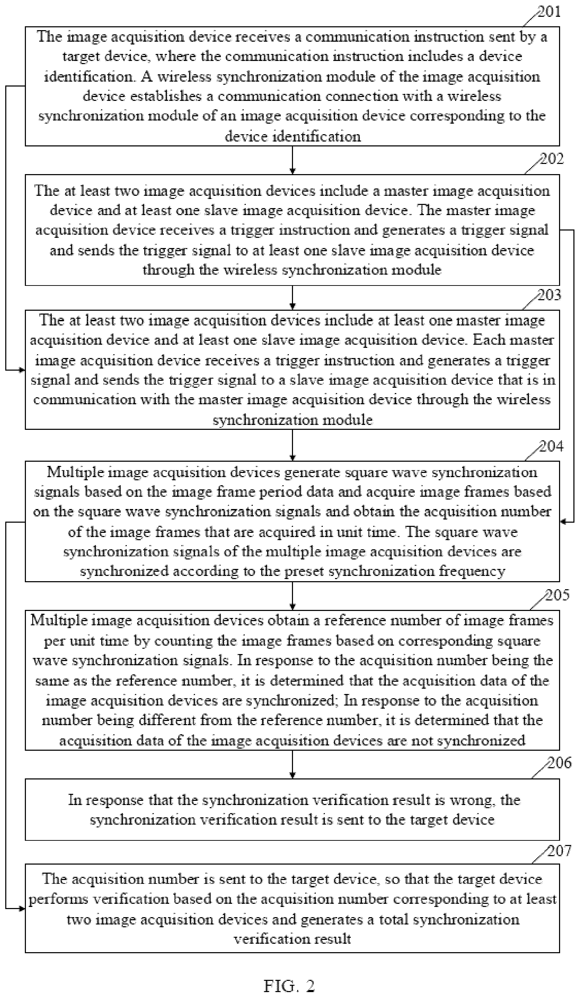

In order to solve the technical problem that the collected signals may not be monitored and proofread in real time and the image synchronization may not be guaranteed during a collection process. the above embodiments propose synchronization of data collected by a cluster of image acquisition devices at the same time in any scanning scenario, such as to meet the needs of one spatial position tracking device in conjunction with multiple three-dimensional data image acquisition devices, and to meet the needs of multiple spatial position tracking devices in conjunction with the multiple three-dimensional data image acquisition devices, thereby improving the efficiency of collaborative work of the cluster. The time base and frame rate of the collected signals may be double checked every second to ensure high precision of the synchronization signal. In addition, during the synchronization process, if the wireless communication is interrupted or asynchronism occurs, the image acquisition device will report it in time to reduce invalid image data caused by asynchronism, which is described in detail below in conjunction with FIG. 2.

FIG. 2 is a flowchart of another synchronization verification method provided by an embodiment of the present disclosure. Based on the above embodiment, this embodiment further optimizes the above synchronization verification method. As shown in FIG. 2, the method includes:
Step 201, the image acquisition device receives a communication instruction sent by a target device, where the communication instruction includes a device identification. A wireless synchronization module of the image acquisition device establishes a communication connection with a wireless synchronization module of an image acquisition device corresponding to the device identification.
Step 202, the at least two image acquisition devices include a master image acquisition device and at least one slave image acquisition device. The master image acquisition device receives a trigger instruction and generates a trigger signal and sends the trigger signal to at least one slave image acquisition device through the wireless synchronization module.
Step 203, the at least two image acquisition devices include at least one master image acquisition device and at least one slave image acquisition device. Each master image acquisition device receives a trigger instruction and generates a trigger signal and sends the trigger signal to a slave image acquisition device that is in communication with the master image acquisition device through the wireless synchronization module.

After step 201, step 202 or step 203 is executed.

Specifically, the target device (such as a computer or a computer group or cloud) sends the trigger instruction to enable the spatial position tracking device and the three-dimensional data image acquisition device to communicate with each other through the wireless synchronization module. The target device may arbitrarily specify any two or more of the above-mentioned image acquisition devices to communicate, and the synchronization operation may only be performed after the communication is successful.

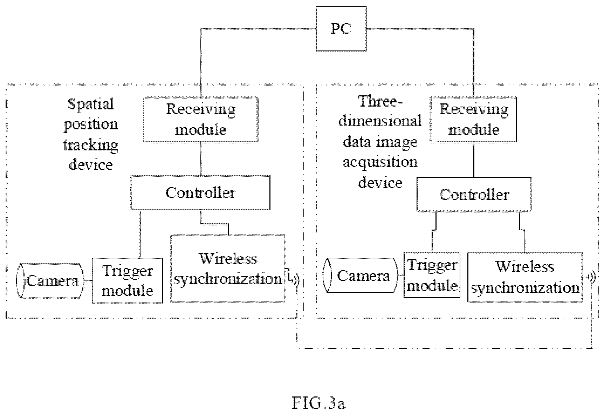

Exemplarily, FIG. 3a is a schematic diagram of the connection of an image acquisition device provided in an embodiment of the present disclosure. As shown in FIG. 3a, it includes a spatial position tracking device and a three-dimensional data image acquisition device. The spatial position tracking device and the three-dimensional data image acquisition device are respectively connected to a PC (Personal Computer). A trigger instruction is received by a receiving module of the spatial position tracking device to generate the trigger signal, which is sent to the wireless synchronization module of the three-dimensional data image acquisition device through the wireless synchronization module. The controller controls the trigger module based on the generated square wave synchronization signal and triggers the camera to capture image through the trigger module.

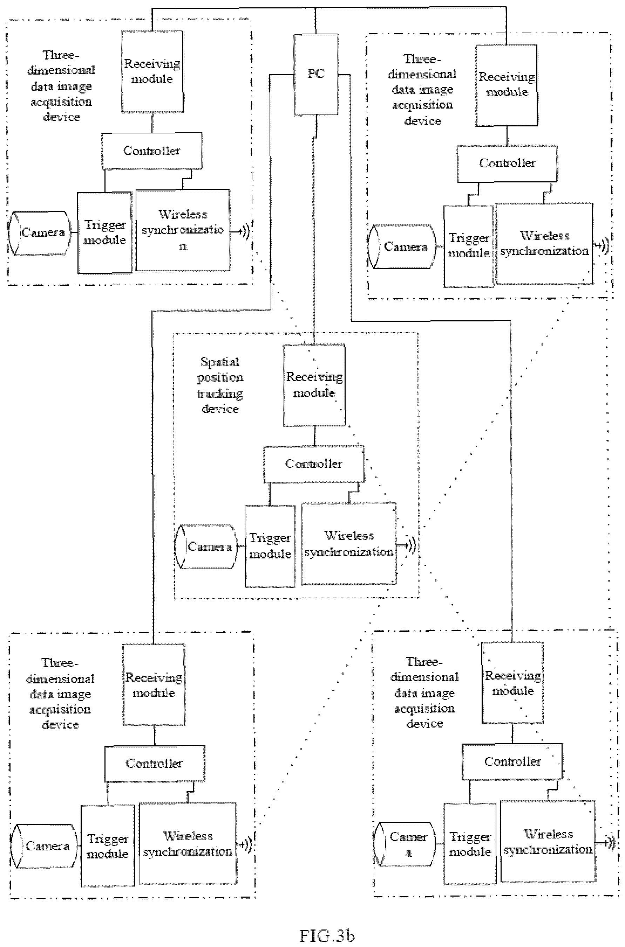

Exemplarily, FIG. 3b is a schematic diagram of another connection of an image acquisition device provided by an embodiment of the present disclosure. As shown in FIG. 3b, there is a spatial position tracking device and four three-dimensional data image acquisition devices. The spatial position tracking device is set as a master device to generate a trigger signal after receiving a trigger instruction and sends the trigger signal to the wireless communication modules of the four three-dimensional data image acquisition devices through a wireless synchronization module. Similarly, the controller controls the trigger module based on the generated square wave synchronization signal and triggers the camera to capture image through the trigger module.

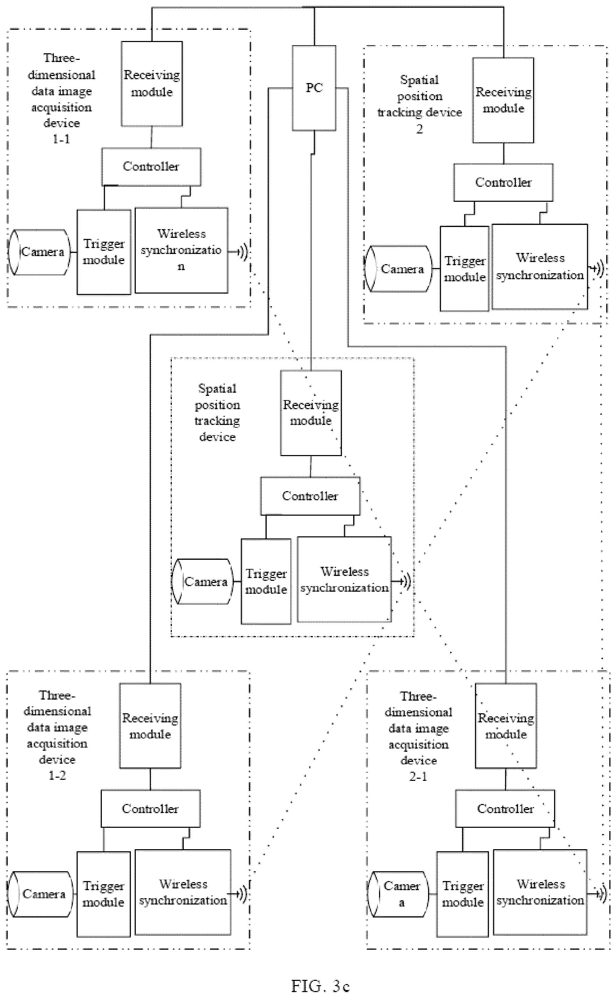

Exemplarily, FIG. 3c is a schematic diagram of another connection of an image acquisition device provided by an embodiment of the present disclosure. As shown in FIG. 3c, there are two spatial position tracking devices and three three-dimensional data image acquisition devices, where a spatial position tracking device 1 is communicatively connected with a three-dimensional data image acquisition device 1-1 and a three-dimensional data image acquisition device 1-2, and a spatial position tracking device 2 is communicatively connected with a three-dimensional data image acquisition device 2-1. The two spatial position tracking devices are set as master devices and simultaneously receive the trigger instruction sent by a computer to generate the trigger signal, and the spatial position tracking device 1 sends the trigger signal to the wireless communication modules of the three-dimensional data image acquisition device 1-1 and the three-dimensional data image acquisition device 1-2 respectively through the wireless synchronization module, and the spatial position tracking device 2 sends the trigger signal to the wireless communication module of the three-dimensional data image acquisition device 2-1 through the wireless synchronization module. Similarly, the controller controls the trigger module based on the generated square wave synchronization signal and triggers the camera to capture image through the trigger module.

Therefore, the synchronous verification method of the embodiment of the present disclosure may meet the application scenarios of a single set of device (i.e., a spatial position tracking device and a three-dimensional data image acquisition device), as well as an application scenarios of a cluster (i.e., a spatial position tracking device and multiple three-dimensional data image acquisition devices or multiple spatial position tracking devices and multiple three-dimensional data image acquisition devices), thereby improving image acquisition efficiency.

Step 204, multiple image acquisition devices generate square wave synchronization signals based on the image frame period data and acquire image frames based on the square wave synchronization signals and obtain the acquisition number of the image frames that are acquired in unit time. The square wave synchronization signals of the multiple image acquisition devices are synchronized according to the preset synchronization frequency.

Specifically, after receiving the trigger instruction for acquiring images, the spatial position tracking device generates a trigger signal and sends the trigger signal to the three-dimensional data image acquisition device through the wireless module. The wireless modules of the spatial position tracking device and the three-dimensional data image acquisition device generate corresponding square wave synchronization signals according to the image frame period data of the trigger instruction, and the image acquisition devices of the spatial position tracking device and the three-dimensional data image acquisition device are triggered by the square wave synchronization signal, and the frame counting is performed at the same time to obtain the acquisition number of the image frames per unit time. A square wave pulse period may be determined based on the square wave synchronization signal, and based on the square wave pulse period, for example, how many frames of images are collected per second, thereby obtaining the acquisition number.

At the same time, the wireless synchronization module outputs a pulse signal every second to realign the square wave synchronization signal, effectively reducing the cumulative error during the synchronization process.

Step 205, multiple image acquisition devices obtain a reference number of image frames per unit time by counting the image frames based on corresponding square wave synchronization signals. In response to the acquisition number being the same as the reference number, it is determined that the acquisition data of the image acquisition devices are synchronized; In response to the acquisition number being different from the reference number, it is determined that the acquisition data of the image acquisition devices are not synchronized.

Step 206, in response that the synchronization verification result is invalid, the synchronization verification result is sent to the target device.

Specifically, a reference number is obtained by calculating through a square wave synchronization signal and the reference number is compared with the acquisition number. If the reference number and the acquisition number within a unit time, such as one second, are consistent, it is determined that the synchronization verification result is normal, otherwise, an error is reported.

Step 207, the acquisition number is sent to the target device to make the target device perform verification based on the acquisition numbers corresponding to the at least two image acquisition devices and generate a total synchronization verification result.

Specifically, each acquisition device may report the number of the acquired image frames, that is, the acquisition number, to the target device. In a case of synchronization, the received acquisition numbers are the same, so they may be compared through the received acquisition numbers. If the acquisition numbers are not the same, the corresponding image acquisition device may be out of synchronization and require further processing. Therefore, the image acquisition frequency of the corresponding image acquisition device may be adjusted in real time to ensure synchronous image acquisition and improve image acquisition accuracy and efficiency.

Specifically, when there are multiple image acquisition devices, one of the multiple image acquisition devices may be directly designated as the master device and the others as slave devices through a computer. The master and slave devices may also achieve quasi-synchronization of image acquisition in accordance with the above-mentioned embodiment, and the master and slave devices may both detect errors through double check and report them in time, that is, the synchronization of images acquired by the master image acquisition and slave devices during the scanning process may be ensured, and it has a real-time synchronization signal double checked function, which effectively improves the accuracy and effectiveness of the acquired data.

After step 204, steps 205-206 and/or step 207 may be performed, which are only examples in FIG. 2.

The synchronization verification scheme provided by the embodiment of the present disclosure is that the image acquisition device receives the communication instruction sent by the target device, where the communication instruction includes a device identification, the wireless synchronization module of the image acquisition device establishes a communication connection with the wireless synchronization module of the image acquisition device corresponding to the device identification, at least two image acquisition devices include a master image acquisition device and at least one slave image acquisition device, the master image acquisition device receives the trigger instruction and generates a trigger signal at the same time and sends the trigger signal to at least one slave image acquisition device through the wireless synchronization module. At least two image acquisition devices include at least one master image acquisition device and at least one slave image acquisition device, each master image acquisition device receives the trigger instruction and generates a trigger signal at the same time and sends the trigger signal to the slave image acquisition device that is connected to the master image acquisition device through the wireless synchronization module. The multiple image acquisition devices generate square wave synchronization signals based on image frames periodic data and obtain an acquisition number of the image frames that are acquired in unit time based on the square wave synchronization signals. The square wave synchronization signals of the plurality of image collection devices are synchronized according to a preset synchronization frequency, and the plurality of image collection devices perform calculations based on the corresponding square wave synchronization signals to obtain a reference number of the image frames per unit time; in response to the acquisition number being the same as the reference number, it is determined that the collection data of the image collection devices are synchronized. In response to the acquisition number being different from the reference number, it is determined that the collection data of the image collection devices are not synchronized. In response that the synchronization verification result is invalid, the synchronization verification result is reported to the target device, and the acquisition number is reported to the target device, so that the target device performs verification based on the collection data corresponding to at least two image collection devices to generate a total synchronization verification result. Therefore, during the image acquisition process, the embodiment of the present disclosure may perform double check on the time base and frame rate of the acquisition signal, reduce the accumulated errors caused by the time base or the acquisition data asynchrony caused by frame loss, ensure synchronization accuracy, and during the image acquisition process, once wireless synchronization interruption or asynchrony occurs, the image acquisition device will report it in a timely manner to ensure the validity and accuracy of the synchronized image data.

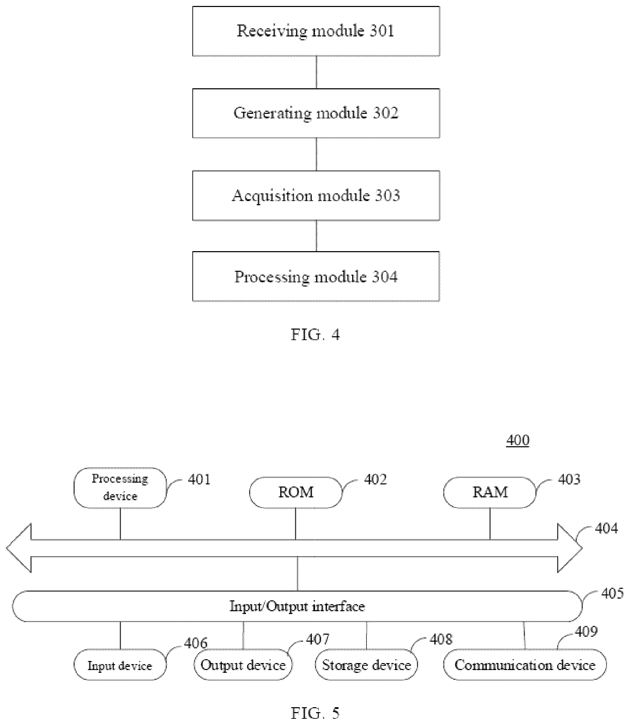

FIG. 4 is a schematic diagram of the structure of a synchronization verification apparatus provided by an embodiment of the present disclosure, which may be implemented by software and/or hardware and may generally be integrated in an electronic device. As shown in FIG. 4, the apparatus is applied to a scanning device, which includes at least two image acquisition devices, and the apparatus includes:
A receiving module 301 is used to receive a trigger instruction by at least one of the image acquisition devices simultaneously, where the trigger instruction includes image frame period data.

A generating module 302 is used to generate corresponding square wave synchronization signals based on the image frame period data by the plurality of image acquisition devices.

An acquisition module 303 is used to acquire image frames by the plurality of image acquisition devices based on the corresponding square wave synchronization signal and obtain the acquisition number of image frames acquired per unit time. where the square wave synchronization signals of the plurality of image acquisition devices are synchronized according to a preset synchronization frequency.

A processing module 304 is used to generate a synchronization verification result of the multiple image acquisition devices based on the square wave synchronization signals and the acquisition numbers of the multiple image acquisition devices.

Optionally, the apparatus further includes:
A first reporting module is used to report the acquisition number to the target device, so that the target device performs verification based on the acquisition number corresponding to the at least two image acquisition devices to generate a total synchronization verification result.

Optionally, each of the image acquisition devices includes a wireless synchronization module, and the at least two image acquisition devices include a master image acquisition device and at least one slave image acquisition device. The receiving module 301 is specifically used to:
The master image acquisition device receives the trigger instruction and generates a trigger signal and sends the trigger signal to at least one slave image acquisition device through the wireless synchronization module.

Optionally, each of the image acquisition devices includes a wireless synchronization module, and the at least two image acquisition devices include at least one master image acquisition device and at least one slave image acquisition device; the receiving module 301 is specifically used to:
Each of the master image acquisition devices receives the trigger instruction and generates a trigger signal at the same time and sends the trigger signal to the slave image acquisition device that is connected to the master image acquisition devices through the wireless synchronization module.

Optionally, the apparatus further comprises:
A receiving instruction module, used for the image acquisition device to receive a communication instruction sent by a target device, where the communication instruction includes a device identification;

A connection module is used to establish a communication connection between the wireless synchronization module of the image acquisition device and the wireless synchronization module of the image acquisition device corresponding to the device identifier.

Optionally, the processing module 304 is specifically configured to:
obtain a reference number of image frames per unit time by counting the image frames based on corresponding square wave synchronization signals;
determine that the acquisition data of the image acquisition devices are synchronized in response that the acquisition number is the same as the reference number are the same;
determine that the acquisition data of the image acquisition devices are not synchronized in response that the acquisition number is different from the reference number are the same.

Optionally, the apparatus further includes:
A second reporting module is used to send the synchronization verification result to the target device when the synchronization verification result is invalid.

The synchronization verification apparatus provided in the embodiments of the present disclosure may execute the synchronization verification method provided in any embodiment of the present disclosure, and has the corresponding functional modules and beneficial effects of the execution method.

The embodiments of the present disclosure also provide a computer program product, including a computer program/instruction, which implements the synchronization verification method provided by any embodiment of the present disclosure when executed by a processor.

FIG. 5 is a schematic diagram of the structure of an electronic device provided in an embodiment of the present disclosure. Referring specifically to FIG. 5 below, it shows a schematic diagram of the structure of an electronic device 400 suitable for implementing the embodiment of the present disclosure. The electronic device 400 in the embodiment of the present disclosure may include, but is not limited to, a mobile terminal such as a mobile phone, a laptop computer, a digital broadcast receiver, a PDA (personal digital assistant), a PAD (tablet computers), a PMP (portable multimedia player), a vehicle-mounted terminal (such as a vehicle-mounted navigation terminal), etc., and a fixed terminal such as a digital TV, a personal computer, etc. The electronic device shown in FIG. 5 is merely an example and should not impose any limitations on the functions and scope of use of the embodiment of the present disclosure.

As shown in FIG. 5, the electronic device 400 may include a processing device (e.g., a central processing unit, a graphics processing unit, etc.) 401, which may perform various appropriate actions and processes according to a program stored in a read-only memory (ROM) 402 or a program loaded from a storage device 408 into a random access memory (RAM) 403. In the RAM 403, various programs and data required for the operation of the electronic device 400 are also stored. The processing device 401, the ROM 402, and the RAM 403 are connected to each other via a bus 404. An input/output (I/O) interface 405 is also connected to the bus 404.

Typically, the following devices may be connected to the I/O interface 405: an input device 406 including, for example, a touch screen, a touchpad, a keyboard, a mouse, a camera, a microphone, an accelerometer, a gyroscope, etc.; an output device 407 including, for example, a liquid crystal display (LCD), a speaker, a vibrator, etc.; a storage device 408 including, for example, a magnetic tape, a hard disk, etc.; and a communication device 409. The communication device 409 may allow the electronic device 400 to communicate wirelessly or wired with other devices to exchange data. Although FIG. 5 shows an electronic device 400 with various devices, it is not required to implement or have all the devices shown. More or fewer devices may be implemented or have alternatively.

In particular, according to an embodiment of the present disclosure, the process described above with reference to the flowchart may be implemented as a computer software program. For example, an embodiment of the present disclosure includes a computer program product, which includes a computer program carried on a non-transitory computer-readable medium, and the computer program includes a program code for executing the method shown in the flowchart. In such an embodiment, the computer program may be downloaded and installed from the network through the communication device 409, or installed from the storage device 408, or installed from the ROM 402. When the computer program is executed by processing device 401, the above-mentioned functions defined in the synchronization verification method of the embodiment of the present disclosure are executed.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or a semiconductor system, an apparatus or a device, or any combination of the above. More specific examples of computer-readable storage media may include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that may be used by or in combination with an instruction execution system, an apparatus or a device. In the present disclosure, a computer-readable signal medium may include a data signal propagated in a baseband or as part of a carrier wave, which carries a computer-readable program code. This propagated data signal may take a variety of forms, including but not limited to electromagnetic signal, optical signal, or any suitable combination of the above. Computer readable signal media may also be any computer readable medium other than computer readable storage media, which may send, propagate or transmit a program for use by or in conjunction with an instruction execution system, an apparatus or a device. The program code contained on the computer readable medium may be transmitted using any appropriate medium, including but not limited to, a wire, an optical cable, RF (radio frequency), etc., or any suitable combination of the above.

In some embodiments, the client and server may communicate using any currently known or future developed network protocol such as HTTP (Hyper Text Transfer Protocol), and may be interconnected with any form or medium of digital data communication (e.g., a communication network). Examples of communication networks include a local area network (LAN), a wide area network (WAN), an internet, and a peer-to-peer network (e.g., an ad hoc peer-to-peer network), as well as any currently known or future developed network.

The computer-readable medium may be included in the electronic device or may exist independently without being incorporated into the electronic device.

The computer-readable medium carries one or more programs. When the one or more programs are executed by the electronic device, the electronic device: at least one image acquisition device receives a trigger instruction. where the trigger instruction includes image frame period data, a square wave synchronization signal that is generated by multiple image acquisition devices based on the image frame period data, multiple image acquisition devices acquire image frames based on the corresponding square wave synchronization signals and obtains an acquisition number of the image frames acquired per unit time. The square wave synchronization signals of the multiple image acquisition devices are synchronized according to a preset synchronization frequency, and a synchronization verification result of the multiple image acquisition devices are generated based on the square wave synchronization signals and the acquisition number of the image frames.

For performing operations of the present disclosure may be written in one or more programming languages or a combination thereof, including, but not limited to, an object-oriented programming language, such as Java, Smalltalk, C++, and a conventional procedural programming language, such as "C" or similar programming language. The program code may be executed entirely on a computer of a user, partially on the computer of the user, as a separate software package, partially on the computer of the user and partially on a remote computer, or entirely on a remote computer or a server. In cases involving a remote computer, the remote computer may be connected to the computer of the user through any type of network, including a local area network (LAN) or a wide area network (WAN), or may be connected to an external computer (e.g., via the Internet using an Internet service provider).

The flowchart and schematic diagram in the accompanying drawings illustrate the possible architecture, function and operation of the system, method and computer program product according to various embodiments of the present disclosure. In this regard, each square box in the flowchart or schematic diagram may represent a module, a program segment or a part of a code, and the module, the program segment or the part of the code includes one or more executable instructions for realizing the specified logical function. It should also be noted that in some implementations as replacements, the functions marked in the square box may also occur in a sequence different from that marked in the accompanying drawings. For example, two square boxes represented in succession may actually be executed substantially in parallel, and they may sometimes be executed in the opposite order, depending on the functions involved. It should also be noted that each square box in the block diagram and/or flow chart, and the combination of the square boxes in the block diagram and/or flow chart may be implemented with a dedicated hardware-based system that performs a specified function or operation, or may be implemented with a combination of dedicated hardware and computer instructions.

The unit involved in the embodiments described in the present disclosure may be implemented by software or hardware, where the name of the unit does not, in some cases, constitute a limitation on the unit itself.

The functions described above herein may be performed at least in part by one or more hardware logic components. For example, exemplary types of hardware logic components that may be used include, without limitation, a field programmable gate array (FPGAs), an application specific integrated circuit (ASIC), an application specific standard product (ASSP), a system on chip (SOC), a complex programmable logic device (CPLD), and the like.

In the context of the present disclosure, a machine-readable medium may be a tangible medium that may contain or store a program for use by or in conjunction with an instruction execution system, a device, or an equipment. A machine-readable medium may be a machine-readable signal medium or a machine-readable storage medium. A machine-readable medium may include, but is not limited to, an electronic, magnetic, optical, electromagnetic, infrared, or a semiconductor system, an apparatus, or a device, or any suitable combination of the foregoing. A more specific example of a machine-readable storage medium may include an electrical connection based on one or more lines, a portable computer disk, a hard disk, a random access memory(RAM), a read-only memory (ROM), an erasable programmable read-only memory (EPROM) or a flash memory, an optical fiber, a portable compact disk read-only memory (CD-ROM), an optical storage device, a magnetic storage device, or any suitable combination of the foregoing.

According to one or more embodiments of the present disclosure, the present disclosure provides an electronic device, including:
a processor;
a storage device for storing instructions executable by the processor;

The processor is used to read the executable instructions from the storage device and execute the instructions to implement any synchronization verification method provided in the present disclosure.

According to one or more embodiments of the present disclosure, the present disclosure provides a computer-readable storage medium, where the storage medium stores a computer program, and the computer program is used to execute the synchronization verification method as provided in the present disclosure.

It should be noted that, in the present disclosure, relational terms such as "first" and "second" are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that a process, a method, an article or a device including a series of elements includes not only those elements, but also other elements not explicitly listed, or also includes elements inherent to such process, method, article or device. In the absence of further restrictions, the elements defined by the sentence "include a ..." do not exclude the existence of other identical elements in the process, method, article or device including the elements.

The above description is only a specific embodiment of the present disclosure, so that those skilled in the art may understand or implement the present disclosure. Various modifications to the embodiment will be apparent to those skilled in the art, and the general principles defined herein may be implemented in other embodiment without departing from the spirit or scope of the present disclosure. Therefore, the present disclosure will not be limited to the embodiment shown herein but will conform to the widest scope consistent with the principles and novel features disclosed herein.

### Industrial Applicability

The synchronization verification method provided by the present disclosure may perform double check of the time base and frame rate of the image acquisition device to ensure synchronization accuracy, further meet the needs of different scenarios, improve data acquisition efficiency, and has strong industrial practicality.

## Claims

1. A synchronous verification method, **characterized in that** the method is applied to a scanning device, the scanning device comprising at least two image acquisition devices, and the method comprising:
receiving a trigger instruction by at least one of the image acquisition devices, the trigger instruction comprising image frame period data;
generating square wave synchronization signals based on the image frame period data by a plurality of image acquisition devices;
acquiring image frames based on the square wave synchronization signals via the plurality of image acquisition devices and obtaining an acquisition number of the image frames that are acquired per unit time; wherein the square wave synchronization signals of the plurality of image acquisition devices are synchronized according to a preset synchronization frequency;
generating a synchronization verification result of the plurality of image acquisition devices based on the square wave synchronization signals and acquisition numbers of the plurality of image acquisition devices.

2. The synchronization verification method according to claim 1, further comprising:
sending the acquisition number to a target device, wherein the acquisition number enables the target device to perform a verification based on the acquisition numbers corresponding to the image acquisition devices and generate a total synchronization verification result.

3. The synchronization verification method according to claim 1 or 2, wherein each of the image acquisition devices comprises a wireless synchronization module, and the at least two image acquisition devices comprise a master image acquisition device and at least one slave image acquisition device;
receiving the trigger instruction by at least one of the image acquisition devices comprises:
receiving the trigger instruction via the master image acquisition device and generating a trigger signal;
sending the trigger signal to the at least one slave image acquisition device through the wireless synchronization module.

4. The synchronization verification method according to claim 1 or 2, wherein each of the image acquisition devices comprises a wireless synchronization module, and the at least two image acquisition devices comprise at least one master image acquisition device and at least one slave image acquisition device;
receiving the trigger instruction by at least one of the image acquisition devices comprises:
receiving the trigger instruction via each of the master image acquisition device and generating a trigger signal;
sending the trigger signal to the at least one slave image acquisition device that is connected to the master image acquisition device through the wireless synchronization module.

5. The synchronization verification method according to claim 3 or 4, wherein before receiving the trigger instruction by at least one of the image acquisition devices, the method further comprises:
receiving a communication instruction sent by a target device via the image acquisition device, wherein the communication instruction comprises a device identification;
establishing a communication connection between the wireless synchronization module of the image acquisition device and the wireless synchronization module of the image acquisition device corresponding to the device identifier.

6. The synchronization verification method according to any one of claims 1 to 5, wherein generating the synchronization verification result of the plurality of image acquisition devices based on the square wave synchronization signals and the acquisition numbers of the plurality of image acquisition devices comprises:
obtaining a reference number of image frames per unit time by counting the image frames based on corresponding square wave synchronization signals;
determining that the acquisition numbers of the plurality of image acquisition devices are synchronized in response to the acquisition number being the same as the reference number;
determining that the acquisition numbers of the plurality of image acquisition devices are not synchronized in response to the acquisition number being different from the reference number.

7. The synchronization verification method according to any one of claims 1 to 6, further comprising:
sending the synchronization verification result to the target device in response that the synchronization verification result is invalid.

8. A synchronization verification apparatus, the synchronization verification apparatus is applied to a scanning device, the scanning device comprising at least two image acquisition devices, and the synchronization verification apparatus comprising:
a receiving module, is configured to receive a trigger instruction by at least one of the image acquisition devices, the trigger instruction comprising image frame period data;
a generating module, is configured to generate square wave synchronization signals based on the image frame period data by a plurality of image acquisition devices;
an acquisition module, is configured to acquire image frames based on the square wave synchronization signals via the plurality of image acquisition devices and obtaining an acquisition number of the image frames that are acquired per unit time; wherein the square wave synchronization signals of the plurality of image acquisition devices are synchronized according to a preset synchronization frequency;
a processing module, is configured to generate a synchronization verification result of the plurality of image acquisition devices based on the square wave synchronization signals and acquisition numbers of the plurality of image acquisition devices.

9. An electronic device, comprising:
a processor;
a storage device for storing instructions executable by the processor;
the processor is used to read the instructions from the storage device and execute the instructions to implement the synchronization verification method described in any one of claims 1 to 7.

10. A computer-readable storage medium, the storage medium stores a computer program, and the computer program is used to execute the synchronization verification method described in any one of claims 1 to 7.
